# EUROPÄISCHE PATENTANMELDUNG

(11) **EP 0 816 371 A1**
(43) Veröffentlichungstag der Anmeldung: **07.01.1998**
(21) Anmeldenummer: 96110460.1
(22) Anmeldetag: 28.06.1996
(51) Int. Cl.: C07F 17/00, C08F 10/00

(54) **Verfahren zur stereoselektiven Herstellung von chiralen Metallocenen**

(71) Anmelder: PCD-Polymere Gesellschaft m.b.H., A-2323 Schwechat-Mannswörth (AT)
(72) Erfinder: Die Erfindernennung liegt noch nicht vor
(74) Vertreter: Kunz, Ekkehard, Dr.

(57) **Zusammenfassung**

Chirale Metallocene der Formel 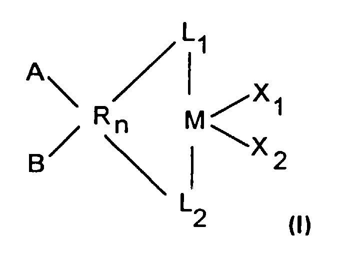 die racemische oder pseudoracemische Formen bilden, worin M ein Metall aus der Gruppe Ti, Zr, Hf, V, Nb, Ta oder ein Element aus der Gruppe der Lanthaniden ist, A, B, X₁ und X₂ eine Alkyl-, Alkoxy-, Aryl-, Aryloxy-, Alkenyl-, Arylalkyl-, Alkylaryl- oder Arylalkenylgruppe, Wasserstoff oder Halogen und L₁ und L₂ einen substituierten Cyclopentadienylrest oder einen unsubstiuierten oder substituierten Indenylrest bedeuten und R für C, Si, Ge oder Sn steht.

## Beschreibung

Die Erfindung betrifft ein Verfahren zur stereoselektiven Herstellung von chiralen Metallocenen und deren Einsatz als Katalysatoren bei der Olefinpolymerisation.

Metallocene der Metalle der IV. Nebengruppe des Periodensystems der Elemente sind hochaktive Katalysatoren für die Polymerisation von Olefinen. Die resultierenden Polyolefine besitzen neue Eigenschaftskombinationen und ergänzen das Produktspektrum der bisher mit bekannten konventionellen Ziegler-Natta-Katalysatoren hergestellten Polyolefine.
Es ist bekannt, daß Katalysatoren auf der Basis unverbrückter, substituierter und unsubstituierter Biscyclopentadienyl-Metallocene im Zusammenwirken mit Aluminoxanen als Cokatalysator für die Herstellung von Polyethylen und Ethylen/α-OIe- fin-Copolymere genutzt werden können (BASF US 4,404,344).
Des weiteren ist bekannt, daß mit verbrückten, chiralen Metallocenen stereoreguläre Polyolefine darstellbar sind. In Abhängigkeit vom Ligandentyp und den Substituenten können isotaktische, syndiotaktische, hemiisotaktische, stereoblockartige und ataktische Homo- und Copolymere mit aliphatischen oder cyclischen Strukturen dargestellt werden.

Von diesen verschiedenen Metallocentypen erlangten die verbrückten, chiralen, substituierten Bisindenylsysteme eine besondere Bedeutung für die Propylenpolymerisation. So konnte nachgewiesen werden, daß die Art der Substituenten und die Stellung der Substituenten am Liganden des Metallocens einen wesentlichen Einfluß auf die Reaktivität des Katalysatorsystems und den stereoregulären Aufbau der erhaltenen Polyolefine ausüben. Besonders zwei Substitutionsmöglichkeiten erwiesen sich als vorteilhaft. Die erste Möglichkeit geht von einer Substitution am Indenylliganden in 2-, 4- und/oder 6- Position aus (Hoechst EPA 485823; Angew. Chem., 10 (1992) 1373), die zweite Möglichkeit beschreibt die Anellierung am Benzolring des Indenylliganden (Organometallics 1994,13, 964-970). Beide Katalysatortypen können für die Darstellung isotaktischer Polypropylene und Ethylen/α-Olefin-Copolymere eingesetzt werden.

Bei der Synthese von C₂-symmetrischen Metallocenen für die Propylenpolymerisation fallen die Verbindungen in der Regel als Stereoisomerengemische (Mischungen von rac- und meso- Formen) an. Zur Herstellung von hochisotaktischen Polyolefinen und besonders für die Propylenpolymerisation ist es notwendig, möglichst reine oder hoch angereicherte Racemate einzusetzen (Exxon EPA 0 344 887). Die meso- Form muß deshalb abgetrennt werden, weil beim Einsatz als Polymerisationskatalysator ataktische Produkte gebildet werden. Ein weiterer Grund für die Abtrennung der meso-Form bzw. die Anreicherung der rac- Form besteht in der teilweise erheblich geringeren Aktivität der meso- Form (Hoechst EPA 584 602). Diese Forderungen gelten auch für Metallocene, die aufgrund unterschiedlicher Substituenten in der Brücke unsymmetrisch sind aber die gleiche räumliche Anordnung der substituierten Indenyl-Liganden besitzen. In diesem Fall werden pseudorac- bzw. pseudomeso- Isomere gebildet. Eine weitere Gruppe, für die diese Anforderungen gelten, bilden Metallocene, die in der Brücke gleiche oder verschiedene Substituenten besitzen, aber zusätzlich unterschiedlich substituierte Indenyl-Liganden haben. Diese bilden formale pseudorac und formale pseudomeso-Isomere.
Da die Abtrennung der meso- bzw. pseudomeso- Form (echte und formale) einen zusätzlichen Aufwand erfordert, wurden verschiedene Versuche unternommen, das rac/meso-Verhältnis bereits in der Synthese gezielt zu beeinflussen (Organometallics, 1995, 14, 5; Witco EPA 669 340). Der Nachteil dieser Methoden besteht hauptsächlich in der mangelnden universellen Einsetzbarkeit für die Herstellung beliebiger Metallocene.

Es bestand somit die Aufgabe, ein neues Syntheseverfahren zur Herstellung von Metallocenen zu finden, das es gestattet, die reinen Racemate- oder Pseudoracemate (echte und formale) herzustellen bzw. die Racematausbeuten deutlich zu erhöhen.

Überraschenderweise wurde nun gefunden, daß durch die Verwendung von speziellen Lösungsmittelgemischen mit einer bestimmten Polarität für die Umsetzung der dimetallierten Ligandenpaare mit der Übergangsmetallverbindung die Stereoselektivität und somit die Ausbeute der Zielverbindungen grundsätzlich erhöht wird. Weiters wurde gefunden, daß bei zusätzlicher Einführung asymmetrischer Brückenstrukturen diese Unterdrückung von unerwünschten meso- bzw. pseudomeso-Isomeren signifikant durch einen kooperativen Effekt gesteigert werden kann.

Gegenstand der vorliegenden Erfindung ist demnach ein Verfahren zur Herstellung von chiralen Metallocenen der Formel I 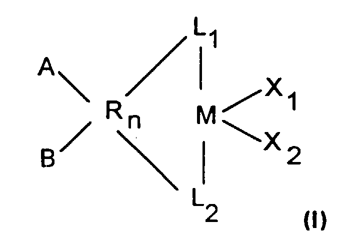 worin M ein Metall aus der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇ - C₂₀- Arylalkylgruppe, eine C₇ - C₂₀-Alkylarylgruppe, eine C₈ - C₂₀ - Arylalkenylgruppe, Wasserstoff oder ein Halogenatom bedeuten,
L₁ und L₂ gleich oder verschieden sind und substituierte Cyclopentadienyl- oder substituierte oder unsubstituierte Indenylreste bedeuten,
R Kohlenstoff, Silizium, Germanium oder Zinn ist,
A und B gleich oder verschieden sind und die Bedeutung von X₁ und X₂ oder eines unsubstituierten oder substituierten Silylrestes, wie er beispielsweise in der DE-OS 195 27 047 beschrieben ist, haben und n für eine ganze Zahl von 1 bis 4 steht.

Als Liganden L1 und/oder L2 sind Indenyl-, 2-Methyl-indenyl-, 2-Methyl-4-Phenyl-indenyl-, 2-Methyl-4,5-benzoindenyl- sowie ferrocen- und ruthenocen-substituierte Einheiten, wie sie beispielsweise in der EP-A-673.946 beschrieben sind, bevorzugt.

Als Brücken R sind besonders Silandiyl- oder Methylengruppen bevorzugt, die gleiche oder ungleiche Alkyl-, Silyl- oder Arylsubstituenten haben. Besonders bevorzugt sind Brücken mit Methyl-, Trimethylsilyl- oder Phenylsubstituenten, wie beispielsweise in DE-OS 195 27 047 beschrieben.

Die Herstellung der Metallocene gemäß Formel I erfolgt dadurch, daß man eine Verbindung der Formel II 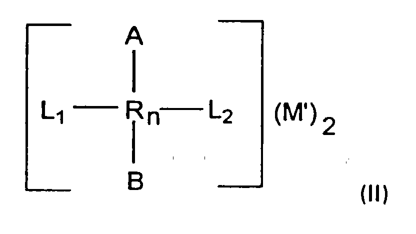 wobei L₁, L₂, A, B, R und n die in Formel I beschriebene Bedeutung haben und M^{'} ein Alkalimetall, bevorzugt Lithium, bedeutet, mit einer Verbindung der Formel III

M (X')₂ X₁ X₂ (III),

worin M, X₁ und X₂ die in Formel I genannte Bedeutung besitzen und X' ein Halogenatom, bevorzugt Chlor bedeutet, umsetzt.

Die Metallocene I können beispielsweise nach folgendem Reaktionsschema hergestellt werden: 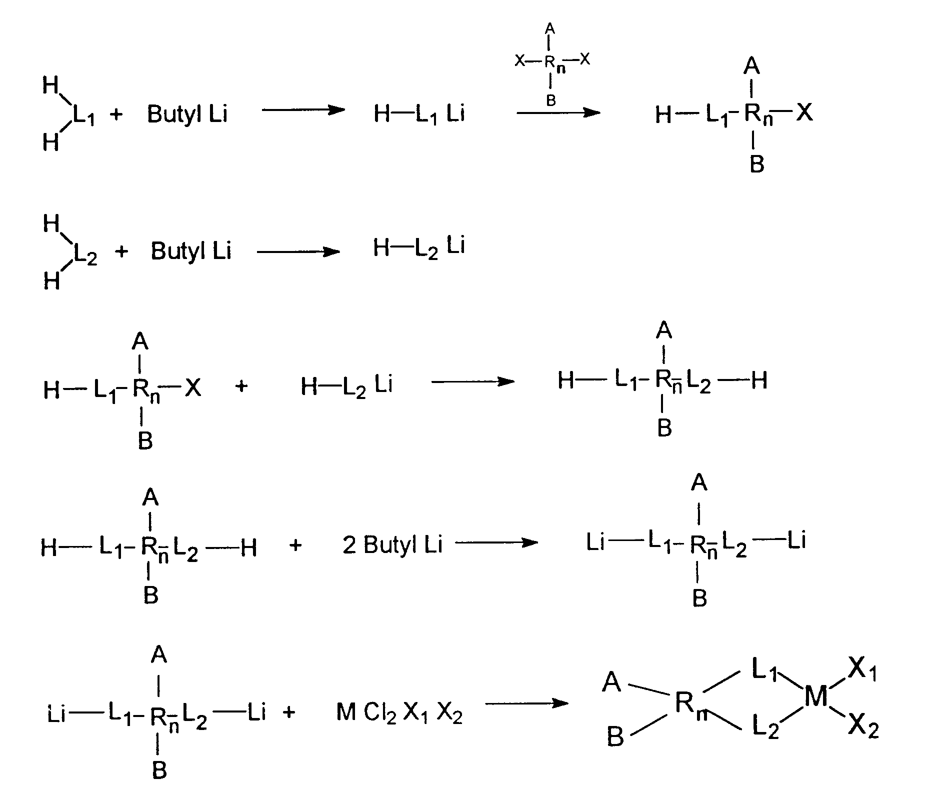
X = F; Cl; Br; J
X₁, X₂, L₁ und L₂ haben die oben genannte Bedeutung.

Die Umsetzung der dimetallierten Ligandenpaare der Formel II mit dem Metallhalogenid der Formel III in der letzten Stufe des erfindungsgemäßen Verfahrens erfolgt in Suspension in Lösungsmittelgemischen aus aromatischen und/oder aliphatischen Kohlenwasserstoffen, die auch halogeniert sein können, mit Dialkylethern, vorzugsweise Alkan/Dialkylether-Gemischen, wie zum Beispiel Hexan/Diethylether-Gemische. Die Lösungsmittelgemische besitzen bevorzugt Übergangsenergien E_{T}(30) (empirischer Parameter als Maß für die Polarität von Lösungsmitteln) in einem Bereich von 35,5 bis 31,5 kcal/mol, besonders bevorzugt von 34,5 bis 32,5 kcal/mol. Die Übergangsenergie E_{T} (30) wird gemäß Chemical Reviews 1994, Vol. 94, No. 8, 2319 ff. als die Abhängigkeit der Bandenlage und -intensität des Chromophors Pyridinium-N-phenolat-betain vom gewählten Lösungsmittel definiert. Beim Auflösen solcher Charge-Transfer-Komplexe verschiebt sich das Iangwelligste Absorptionsmaximum um so stärker, je polarer das Lösungsmittel ist. Aus der gemessenen Frequenz ν dieses Maximums erhält man durch Umrechnung die Übergangsenergie E_{T}(30) in kcal/mol.

Als Kohlenwasserstoffe und Dialkylether kommen vor allem solche in Frage, wie sie beispielsweise in Chemical Reviews 1994, Vol. 94, No. 8, S. 2337 - 2340 angeführt sind. Als aromatische Kohlenwasserstoffe eignen sich beispielsweise solche Verbindungen wie Toluol, Benzol oder p-Xylol. Aliphatische Kohlenwasserstoffe können beispielsweise alle C₅- bis C₁₂-Alkane sein. Bevorzugt sind n-Pentan, n-Hexan, n-Heptan oder Cyclohexan. Besonders brauchbar ist n-Hexan. Bei den Dialkylethern eignen sich bevorzugt alle C₂- bis C₄-Dialkylether, wie zum Beispiel Diethyl-, Di-npro-pyl-, Diisopropyl-, Di-n-butyl- oder Tert.-butyl-methyl-ether. Als halogenierte Kohlenwasserstoffe eignen sich beispielsweise alle C₁- bis C₄- Chloralkane. Besonders bevorzugt ist Dichlormethan.
In einem bevorzugten Verfahren wird eine Verbindung der Formel II als Lösung in Dialkylethern mit einer Verbindung der Formel III als Suspension in aromatischen und/oder aliphatischen Kohlenwasserstoffen, die auch halogeniert sein können, umgesetzt, wobei das Lösungsmittelgemisch eine Übergangsenergie ET(30) von 35,5 bis 31,5 kcal/mol besitzt.

Ein weiterer Gegenstand der Erfindung ist die Verwendung der erfindungsgemäßen Metallocene als Polymerisationskatalysatoren bei der Polymerisation von Olefinen sowie ein Olefinpolymerisationsverfahren, bei dem die erfindungsgemäßen Metallocene als Katalysatoren eingesetzt werden.

Bevorzugt wird bei der Olefinpolymerisation ein Cokatalysator, beispielsweise ein Aluminoxan der Formel IV für den linearen Typ: 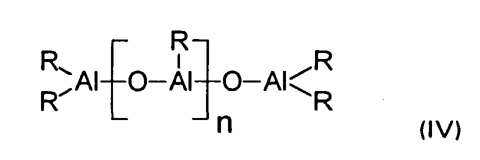 und / oder der Formel V: 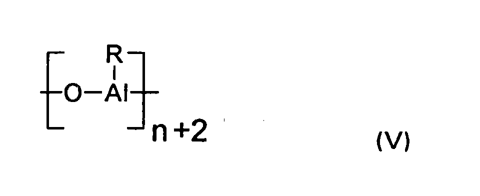 für den cyclischen Typ eingesetzt, wobei in den Formeln IV und V die Reste gleich oder verschieden sein können und eine C₁-C₆-Alkylgruppe bedeuten und n eine ganze Zahl von 1 - 50 ist. Bevorzugt sind die Reste gleich und bedeuten Methyl, Isobutyl, Phenyl oder Benzyl, besonders bevorzugt ist Methyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP 302424). In der vorliegenden Erfindung wird handelsübliches MAO (Methylaluminoxan, Fa. Witco, BRD) verwendet.
Es ist auch möglich, das Metallocen der Formel I vor der Verwendung in der Polymerisationsreaktion mit einem Aluminoxan der Formel IV und/oder V zu mischen. Das Mischen wird bevorzugt in Lösung vorgenommen. Bevorzugt wird dabei das Metallocen in einem inerten Kohlenwasserstoff aufgelöst und anschließend mit der Aluminoxanlösung vermischt. Als inerter Kohlenwasserstoff eignet sich ein aliphatischer oder aromatischer Kohlenwasserstoff. Bevorzugt wird Toluol verwendet.
Die Konzentration des Aluminoxans in der Lösung liegt im Bereich von 5-30 Ma.-% bezogen auf die Gesamtlösung. Das Metallocen wird vorzugsweise in einer Menge von 10 ⁻⁴ - 1 mol pro mol Aluminoxan eingesetzt. Die Mischzeit beträgt etwa 5 Minuten bis 24 Stunden, vorzugsweise 5 bis 60 Minuten. Man arbeitet üblicherweise bei einer Temperatur von -10 bis +70°C, insbesondere bei 10 bis 40°C.

Das Metallocen kann auch auf einen Träger aufgebracht werden. Geeignete Träger sind beispielsweise die anorganischen Oxide der Metalle der II - IV Hauptgruppe des Periodensystems. Bevorzugt sind die Oxide der Metalle Magnesium, Calcium, Aluminium, Silicium, Bor und deren Mischungen, beispielsweise die im Handel erhältlichen Al-Oxide "Alumina Typ C" (Degussa) und Si-Oxide vom Typ "Silica Davison Grade 952-957" oder vom Typ "Aerosil" (Degussa) sowie Mischungen aus Al₂O₃ und SiO₂. Besonders bevorzugt werden Katalysatorträger gemäß EP-A-685.494.

Die Polymerisation kann in Lösungs-, Suspensions- oder Gasphasenverfahren kontinuierlich oder diskontinuierlich bei einer Temperatur von -10 bis +200°C, vorzugsweise +20 bis +80°C durchgeführt werden. Polymerisiert oder copoymerisiert werden Olefine der Formel R^{a}-CH = CH-R^{b}. In dieser Formel sind R^{a} und R^{b} gleich oder verschieden und bedeuten ein Wasserstoffatom oder einen Alkylrest mit 1 bis 20 C-Atomen. R^{a} und R^{b} können jedoch auch mit den sie verbindenden C-Atomen einen Ring bilden. Beispielsweise werden solche Olefine wie Ethylen, Propylen, 1-Buten, 1-Hexen, 4-Methyl-1-penten, 1-Octen, Cyclopenten, Norbornen oder Norbornadien polymerisiert oder copolymerisiert. Insbesondere werden Ethylen, Propylen und 1-Buten polymerisiert oder copolymerisiert.
Als Molmassenregler wird, falls erforderlich, Wasserstoff zugegeben. Der Gesamtdruck der Polymerisation beträgt 0,5 - 150 bar. Bevorzugt ist die Polymerisation, in dem Druckbereich von 1 - 40 bar.
Es hat sich als vorteilhaft erwiesen, die Umsetzung der Monomeren in Gegenwart des Metallocenkatalysatorsystems bei einem Molverhältnis von Aluminium der oligomeren Alumoxanverbindung zum Übergangsmetall der Metallocenverbindung von 10⁶ : 1 bis 10¹ : 1, bevorzugt 10⁴ : 1 bis 10² : 1 durchzuführen.

Wenn die Polymerisation als Suspensions- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan verwendet werden. Brauchbar ist auch Toluol. Bevorzugt wird im flüssigen Monomeren polymerisiert.
Bei der Copolymerisation von Ethylen mit Propylen wird erfindungsgemäß in flüssigem Propylen oder in Hexan als Suspensionsmittel polymerisiert. Vorzugsweise wird bei der Polymerisation in flüssigem Propylen das Ethylen in der Menge zugeführt, daß sich über der Flüssigphase ein Partialdruckverhältnis P_{C2}/P_{C3} von größer als 0.5, insbesondere größer als 1,0 einstellt ( P_{C2} = Partialdruck des Ethylens in der Gas-phase über der Suspension; P_{C3} = Partialdruck des Propylens in der Gasphase über der Suspension). Bei der Copolymerisation in Hexan als Suspensionsmittel wird ein Ethylen /Propylen-Gasgemisch mit einem Propylengehalt von einem bis 50 Mol%, vorzugsweise 5 bis 30 Mol%, zugesetzt. Der Gesamtdruck wird während der Polymerisation durch Nachdosierung konstant gehalten. Der Gesamtdruck beträgt 0,5 bis 40 bar, vorzugsweise 1 bis 20 bar.

Die Dauer der Polymerisation beträgt im allgemeinen etwa 10 Minuten bis 6 Stunden, vorzugsweise 30 Minuten bis 2 Stunden.

Der Vorteil beim Einsatz des erfindinngsgemäßen Verfahrens, bei dem Lösungsmittelgemische bestimmter Polarität, insbesondere Ether/Alkan-Gemische, bei der Umsetzung der dimetallierten Ligandenpaare der Formel II mit dem Metallhalogenid der Formel III verwendet werden, besteht darin, daß im Falle der C₂-symmetrischen Metallocene stereoselektiv höhere Ausbeuten der reinen Racematform und im Falle der unsymmetrischen Metallocene die reinen Pseudoracematformen zuganglich sind.

Die nachfolgenden Beispiele sollen die Erfindung näher erläutern.

Es bedeuten:
- M_{w} =: gewichtsmittlere Molmasse in g/mol,
- Mₙ =: zahlenmittlere Molmasse in g/mol,
- M_{w}/Mₙ =: Molmassenverteilung, ermittelt durch Gelpermeationschromatographie,
- MS: Massenspektroskopie

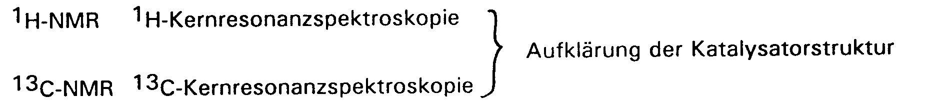

### Synthesebeispiele:

### Methode A: Metallierte Monomerliganden

Um eine optimale Reinheit der Zielmetallocene zu erreichen ist es erforderlich, die isolierten Indenide (Cyclopentadienide) einzusetzen (*J. Organomet. Chem.,* **1995**, *497*,181).

Das entsprechende Indenderivat (5.0 mmol) wird in 60 ml Et₂O gelöst. Zu der auf -50 °C gekühlten Lösung werden mit einer Spritze 1.1 Äquivalente Methyllithium (1.6 molare Lösung in Et₂O, 5.5 mmol, 3.44 ml) zugegeben. Man läßt das Reaktionsgemisch auf Raumtemperatur erwärmen und rührt weitere 16 Stunden. Anschließend wird das Lösungsmittel abgezogen und der Rückstand in 60 ml n-Hexan und 10 ml Et₂O 30 min digeriert. Der Niederschlag wird abfiltriert und zweimal mit 40 ml n-Hexan gewaschen. Nach einstündigem Trocken des Festkörpers am Ölpumpenvakuum bei Raumtemperatur erhält man 60 bis 80 % des entsprechenden Lithiumindenids.

### Methode B1: Ansa-Metallocene via substituierter Dichlorsilane (mit Isolierung des Bisindenylsilans)

Das entsprechende Lithiumindenid (50 mmol) wird in 50 ml Et₂O und 50 ml THF gelöst. Zu der auf -80 °C gekühlten Lösung wird über 20 min eine Lösung des entsprechenden Dichlorsilans (25 mmol) in 30 ml THF zugetropft. Das Reaktionsgemisch wird während 4 Stunden auf Raumtemperatur gebracht und weitere 13 Stunden bei Raumtemperatur gerührt. Nach Gießen auf 50 ml Wasser wird die organische Phase abgetrennt, die wäßrige Phase 3 mal mit je 30 ml Diethylether extrahiert, die vereinigten organischen Phasen 3 mal mit Wasser gewaschen, über wasserfreiem Natriumsulfat getrocknet und das Lösungsmittel am Rotationsverdampfer abgezogen. Die Reinigung des Rohprodukts erfolgt mittels Flash-Säulenchromatographie (Kieselgel 60, Firma Merck). Als Laufmittel werden vorzugsweise n-Hexan / CH₂Cl₂ -Gemische verwendet. Nach Aufarbeitung der Fraktionen erhält man 70-90 % des entsprechenden Bisindenylsilans.

10 mmol des entsprechenden Bisindenylsilans werden in 50 ml Et₂O gelöst und auf - 80 °C gekühlt. Zu dieser Lösung werden 2.2 Äquvivalente Methyllithium (1.6 molare Lösung Et₂O, 22 mmol, 13.75 ml) zugetropft. Man läßt die Lösung während 5 Stunden auf Raumtemperatur ervärmen und rührt weitere 13 Stunden. Nach Entfernen des Lösungsmittels wird der Rückstand in 50 ml n-Hexan digeriert. Der Niederschlag wird abfiltriert, fünfmal mit 30 ml n-Hexan gewaschen und 2 Stunden am Ölpumpenvakuum getrocknet. Man erhält 85-95 % des entsprechenden Dilithiosalzes.
Zu einer auf -80 °C gekühlten Suspension des entsprechenden Dilithiosalzes (10 mmol) in 50 mI Et₂O wird eine, auf -80 °C vorgekühlte Suspension bzw. Lösung des Metallchlorids (5 mmol) in 50 ml n-Hexan, unter Rühren auf einmal zugegeben. Man Iäßt auf Raumtemperatur erwärmen und rührt weitere 52 Stunden. Nach Entfernen des Lösungsmittels wird der Rückstand einmal mit 30ml n-Hexan und zweimal mit 10 ml Et₂O gewaschen. In diesem von organischen Nebenprodukten freigewaschenen Filterkuchen befinden sich neben dem ausgeschiedenen Lithiumchlorid die Metallocenrohprodukte. Der Festkörper wird bedarfsweise in 50 ml CH₂Cl₂ aufgenommen und filtriert. Das Filtrat wird bei Raumtemperatur bis zum beginnenden Niederschlag eingeengt und anschließend 2 Tage bei -20 °C gelagert. Der entstandene Niederschlag wird abfiltriert, viermal mit 15 ml Hexan gewaschen und 2 Stunden bei Raumtemperatur am Ölpumpenvakuum getrocknet. Man erhält ca. 60-90 % des entsprechenden Ansa-Metallocendichlorids.

Spektralreine, von Spuren organischer Verunreinigungen völlig freie Produkte können in allen Fällen durch Auskristallisation aus CH₂Cl₂ erhalten werden.

### Methode B2: Ansa-Metallocene via substituierter Dichlorsilane (ohne Isolierung des Bisindenylsilans)

Zu einer auf 0 °C gekühlten Lösung des entsprechenden, leicht flüchtigen Dichlorsilans (75 mmol) in 50 ml Et₂O werden über 60 min 0.2 Äquivalente des entsprechenden Lithiumindenids (15 mmol) in 150 ml Et₂O zugetropft. Man läßt die entstandene Suspension 4 Stunden bei Raumtemperatur rühren. Nach Entfernen des Lösungsmittels und überschüssigem Dichlorsilan wird der Rückstand 60 min bei 40 °C am Ölpumpenvakuum getrocknet. Der so erhaltene Rückstand wird in 50 ml Et₂O aufgenommen und auf 0°C gekühlt. Zu dieser Lösung wird eine Lösung des entsprechenden zweiten Äquivalents Lithiumindenid (gegebenenfalls auch unterschiedlich zum ersten Lithiumindenid) (15 mmol) in 150 ml Et₂O über 60 min zugetropft. Das Reaktionsgemisch wird 16 Stunden bei Raumtemperatur gerührt. Anschließend wird das Lösungsmittel entfernt, der Rückstand in 200 ml Hexan aufgenommen und abfiltriert. Der Filterkuchen wird zweimal mit 100 ml n-Hexan gewaschen. Die Waschlösungen und das Filtrat werden vereinigt. Nach Entfernen des Lösungsmittels wird der Rückstand in 50 ml Et₂O aufgenommen und auf -80 °C gekühlt. Zu dieser Suspension werden 2 Äquivalente Methyllithium (1.6 molare Lösung, 30 mmol, 18,75 ml) mit einer Spritze zugegeben. Man läßt das Reaktionsgemisch während 4 Stunden auf Raumtemperatur erwärmen und rührt weitere 16 Stunden. Anschließend wird die Suspension wieder auf -80 °C gekühlt und eine auf -80 °C vorgekühlte Suspension bzw. Lösung des Metallchlorids (14 mmol) in 50 ml n-Hexan wird auf einmal zugegeben. Man läßt während vier Stunden auf Raumtemperatur erwärmen und rührt weitere 52 Stunden. Nach Entfernen des Lösungsmittels wird der Rückstand einmal mit 30ml n-Hexan und zweimal mit 10 ml Et₂O gewaschen. In diesem von organischen Nebenprodukten freigewaschenen Filterkuchen befinden sich neben dem ausgeschiedenen Lithiumchlorid die Metallocenrohprodukte. Der Festkörper wird bedartsweise in 50 ml CH₂Cl₂ aufgenommen und filtriert. Das Filtrat wird bei Raumtemperatur bis zum beginnenden Niederschlag eingeengt und anschließend 2 Tage bei -20 °C gelagert. Der entstandene Niederschlag wird abfiltriert, viermal mit 15 ml Hexan gewaschen und 2 Stunden bei Raumtemperatur am Ölpumpenvakuum getrocknet. Man erhält ca. 60-90 % des entsprechenden Ansa-Metallocendichlorids.

### Beispiel 1

### Dimethylsilandiylbis(2-methyl-4-phenylinden-1-yl)zirkoniumdichlorid

Die Darstellung des Lithiumsalzes von 2-Methyl-4-phenylinden (*Organometallics* **1993**, *13*, 954-963) erfolgte nach Methode A.

Ausbeute an 2-Methyl-4-phenylinden-1-yllithium: 83 % (weißes Pulver).

### Spektroskopische Daten:

¹H-NMR (THF-d₈) [ppm]: 2.12 (3H,s, Ind-CH₃); 6.15 (1H, br); 6.65 (1H, br); 7.05-7.55 (8H, m, Aromatendomäne)

Die Darstellung von Dimethylsilandiylbis(2-methyl-4-phenylindenyl)zikonium-dichlorid erfolgte nach Methode B2.
Die Ausbeute an Dimethylsilandiylbis(2-methyl-4-phenylindenyl)zikoniumdichlorid: 78 % (gelbes Pulver).
Isomerenverteilung vor der Umkristallisation aus CH₂Cl₂: 60:40 (rac:meso) (Bestimmung durch Methylierung der Zirkonocendichloride in Et₂O).

Im Gegensatz dazu wird gemäß Stand der Technik nur ein rac : meso-Verhältnis von 50 : 50 erreicht (Organometallics 1994, 13, 954-963).

Isomerenverteilung nach Umkristallisation aus CH₂Cl₂ : 100:0 (rac/meso)

### Spektroskopische Daten:

Die Spektroskopischen Daten entsprechen den in der Literatur angegebenen Werten.

### rac-Form:

¹H-NMR (CD₂Cl₂) [ppm]: 1.34 (6H, s, Si(CH₃)₂) ;2.34 (6H, s,2xInd-CH₃); 6.93 (2H, s, 2x3-C-H); 7.05-7.75 (16H, m, Aromatendomäne);
¹H-NMR (C₆D₆) [ppm]: 0.66 (6H, s, Si(CH₃)₂) ; 1.81 (6H, s,2xInd-CH₃); 6.75-7.8 (18H, m, Aromatendomäne und 3-C-H);

### meso- Form:

¹H-NMR (C₆D₆) [ppm]: 0.56 (3H, s, SiCH₃) ; 1.17 (3H, s, SiCH₃) ; 1.94 (6H, s,2xInd-CH₃); 6.75-7.8 (18H, m, Aromatendomäne und 3-C-H);

### Anmerkung:

¹H-NMR (CD₂Cl₂) der am Zirkonium methylierten Verbindung:
rac -Form: -1.43 (6H, s, Zr(CH₃)₂)
meso -Form: -1.39 (3H, s, ZrCH₃); -1.36 (3H, s, ZrCH₃);

Mikrosonde: Zr/Si/Cl in konsitentem relativen Elementarverhältnis

### Beispiel 2

### Methyl(trimethylsilyl)silandiylbis(2-methylinden-1-yl)zirkoniumdichlorid

Die Darstellung des Lithiumsalzes von 2-Methylinden (EPA 485 823) erfolgte nach Methode A.
Ausbeute an 2-Methylinden-1-yllithium: 86% (weißes Pulver)

Die Darstellung von Methyl(trimethylsilyl)silandiylbis(2-methylinden-1-yl)-zirkoniumdichlorid erfolgte nach Methode B1.
Ausbeute an 1,1,1,2-Tetramethylbis(2-methylinden-1-yl)disilan: 90 % (farbloses Öl)

### Spektroskopische Daten:

C₂₄H₃₀Si₂ (374.67 g/Mol)
IR (KBr) [cm-1]: 3066 w, 3015 w, 2948 w, 2894 w, 1603 w, 1566 w, 1458 w, 1389 w, 1047 w, 1007 w, 856 m, 833 m, 810 m, 781 m, 684 m, 567 s, 501 ss, 490 s, 478 s, 455 s;
MS (El, 30 eV) [m/z(%)]: M⁺: 374 (84), M⁺-Me: 359 (14), M⁺-SiMe3: 301 (54), M⁺-Me-Ind: 245 (100), M⁺-Me-Ind-SiMe3: 172 (58);
¹H-NMR (CD₂Cl₂) [ppm]: -0.06, -0.01, 0.05 (9H, jeweils s, Si(CH₃)₃); 0.19, 0.24, 0.26, 0.28 (3H, jeweils s, Si(CH₃)); 2.19, 2.28, 2.40, 2.49 (6H, jeweils s, (CH₃)); 3.64, 3.88, 3.95 (1H, jeweils s, H1-Ind); 6.76 bis 7.59 (10H, m, Ind);
¹³C{¹H}-NMR (CD₂Cl₂) [ppm]: -6.93, -6.05, -5.81, -4.78 (Si(CH₃)₃); -0.66, -0.55, -0.43, -0.24 (Si(CH₃)); 17.01, 17.84, 17.98, 18.15, 18.28 (C1-Ind); 46.21, 46,34, 46.54, 46.60, 46,73 (CH₃); 119.56 bis 147 (Ind);

### Anmerkung:

Laufmittelgemisch: n-Hexan: CH₂Cl₂ 10:1

### Ausbeute an Methyl(trimethylsilyl)silandiylbis(2-methylinden-1-yl)zirkoniumdichlorid: 84,4 % (gelbes Pulver)

### Spektroskopische Daten:

C₂₄H₂₈Si₂ZrCl₂ (534.79 g/Mol)
MS (El, 30 eV) [m/z(%)]: M⁺: 534 (100), M⁺-Me: 519 (8), M⁺-Cl: 499 (8), M⁺-Cl-Me: 484 (12), M⁺-SiMe3: 461 (100), M⁺-SiMe3-Cl-2H: 424 (31), M⁺-SilMe3-Cl-Me-2H: 409 (18);
"pseudo-rac"-Form
¹H-NMR (CD₂Cl₂) [ppm]: 0.57 (9H, s, Si(CH₃)₃); 1.44 (3H, s, Si(CH₃)); 2.20 und 2.27 (6H, jeweils s, (CH₃)-Ind); 6.65 bis 7.82 (10H, m, Ind);
"pseudo-meso"Form I:
¹H-NMR (CD₂Cl₂) [ppm]: 0.63 (9H, s, Si(CH₃)₃); 1.35 (3H, s, Si(CH₃)); 2.49 (6H, s, (CH₃)-Ind); 6.65 bis 7.82 (10H, m, Ind);
"pseudo-meso"-Form II:
¹H-NMR (CD₂Cl₂) [ppm]: 0.55 (9H, s, Si(CH₃)₃); 1.59 (3H, s, Si(CH₃)); 2.45 (6H, s, (CH₃)-Ind); 6.65 bis 7.82 (10H, m, Ind);

### Mikrosonde: Zr/Si/Cl in konsitentem relativen Elementarverhältnis

Röntgenstrukturanalyse: erwartete Konnektivität und stereochemische Konfiguration am Monomethyl-monochlorderivat bestätigt (pseudo-rac).

Isomerenverteilung vor der Umkristallisation 60 : 40 (rac: gesamt meso).

Isomerenverteilung nach Umkristallisation des Rohproduktes aus CH₂Cl₂ : 100:0:0 (rac:meso I:meso II).

Wird gemäß Stand der Technik unter Verwendung von THF als Lösungsmittel gearbeitet, beträgt die Metallocenausbeute 5 %, wobei die Isomerenverteilung 50 : 50 (rac: gesamt meso) ist.

### Beispiel 3

### Methyl(trimethylsilyl)silandiylbis(2-methylinden-1-yl)zirkoniumdichlorid

Darstellung des Lithiumsalzes von 2-Methylinden und des 1,1,1,2-Tetramethylbis-(2-methylinden-1-yl)disilans erfolgten analog Beispiel 2.

Die Darstellung von Methyl(trimethylsilyl)silandiylbis(2-methylinden-1-yl)zirkoniumdichlorid erfolgte nach Methode B1 unter Verwendung eines Diisopropylether/n-Hexan Gemisches (1:1) beim letzen Schritt der Komplexierungsreaktion.

### Ausbeute an Methyl(trimethylsilyl)silandiylbis(2-methylinden-1-yl)zirkoniumdichlorid: 71,0 % (gelbes Pulver)

### Spektroskopische Daten: siehe Beispiel 2

Isomerenverteilung vor Umkristallisation des Rohproduktes: 50:28:22 (rac:meso I:meso II)
Isomerenverteilung nach Umkristallisation des Rohproduktes aus CH₂Cl₂ : 100:0:0 (rac:meso I:meso II)

### Beispiel 4

### Methyl(trimethylsilyl)silandiylbis(2-methyl-4-phenylinden-1-yl)zirkoniumdichlorid

Die Darstellung des Lithiumsalzes von 2-Methyl-4-phenylinden erfolgte analog nach Methode A.

Die Darstellung von Methyl(trimethylsilyl)silandiylbis(2-methyl-4-phenylinden-1-yl)zirkoniumdichlorid erfolgte nach Methode B1.

Ausbeute an 1,1,1,2-Tetramethylbis(2-methyl-4-phenylinden-1-yl)disilan: 61 % (farbloses Öl).

### Spektroskopische Daten:

C₃₆H₃₈Si₂ (526.87 g/Mol)
IR (KBr) [cm-1]: 3060 w, 3029 w, 2950 m, 2894 w, 2855 w, 1599 w, 1564 w, 1497m, 1466 m, 1443 m, 1412 m, 1246 m, 1215 m, 1155 w, 1128 w, 1043 m, 1028 m, 1007 m, 914 w, 837 s, 798 s, 779 s, 700 s, 671 m, 630 m, 553 m, 480 m, 449 w;
MS (El, 30 eV) [m/z(%)]: M⁺: 527 (51), M⁺-Me-Ph-Ind: 322 (100), M⁺-Me-Ph-Ind-SiMe₃: 249 (73), ), M⁺-Me-Ph-Ind-SiMe₃ -Me: 234 (56), MePhInd⁺: 205 (38), MePhInd⁺-Me: 190 (10);
¹H-NMR (CD₂Cl₂) [ppm]: -0.07, -0.03 (9H, jeweils s, Si(CH₃)₃); 0.24, 0.25 (3H, jeweils s, Si(CH₃)); 2.32, 2.42 (6H, jeweils s, (CH₃)-Ind); 3.98, 4.01 (1H, jeweils s, H1-Ind); 6.91 bis 7.71 (18H, m, Ind, Ph);
¹³C{¹H}-NMR (CD₂Cl₂) [ppm]: -5.50 (Si(CH₃)); -0.55, -0.34, -0.17 (Si(CH₃)₃); 18.12, 18.24, 18.39 (C1-Ind); 46.96, 47.26, 47.37 ((CH₃)-Ind); 122.30, 122.37, 123.07, 125.59, 125.64, 125.88, 126.69, 128.33, 128.83, 134.04, 141.34, 142.53, 146.06, 146.32, 148.32, 148.38, 148.64 (Ind, Ph);
Laufmittelgemisch. n-Hexan : CH₂Cl₂ 9 : 1

Ausbeute an Methyl(trimethylsilyl)silandiylbis(2-methyl-4-phenylinden-1-yl)-zirkoniumdichlorid: 75 % (gelboranges Pulver)

### Spektroskopische Daten:

"pseudo-meso"-Form:
C₃₆H₃₆Si₂ZrCl₂ (686.99 g/Mol)
MS (El, 30 eV) [m/z(%)]: M⁺: 686 (3), M⁺-Cl: 651 (1), M⁺-SiMe₃: 613 (1), M⁺-2Cl-Zr+2H: 526 (15), MePhInd⁺: 206 (100), MePhInd⁺-Me: 191 (86);
¹H-NMR (CD₂Cl₂) [ppm]: 0.67 (9H, s, Si(CH₃)₃); 1.38 (3H, s, Si(CH₃)); 2.49 (6H, s, (CH₃)-Ind); 6.81 bis 7.63 (18H, m, Ind und Ph);
¹³C{1H}-NMR (CD₂Cl₂) [ppm]: -0.93 (Si(CH₃)); 0.22 (Si(CH₃)₃); 19.47 ((CH₃)-Ind); 120.56, 124.35, 125.93, 126.44, 127.99, 128.60, 128.82, 128.89, 139.7 (Ind bzw. Ph);
"pseudo-rac"-Form:
C₃₆H₃₆Si₂ZrCl₂ (686.99 gl/Mol)
MS (El, 30 eV) [m/z(%)]: M⁺: 686 (14), M⁺-Me: 671 (1), M⁺-Cl: 651 (2), M⁺-SiMe₃: 613 (8), MePhInd⁺: 206 (100), MePhInd⁺-Me: 191 (86);
¹H-NMR (CD₂Cl₂) [ppm]: 0.62 (9H, s, Si(CH₃)₃); 1.51 (3H, s, Si(CH₃)); 2.26 und 2.32 (6H, jeweils s, (CH₃)-Ind); 6.95 bis 7.62 (18H, m, Ind und Ph);
¹³C{1H}-NMR (CD₂Cl₂) [ppm]: -0.93 (Si(CH₃)); 0.02 (Si(CH₃)₃); 19.12 und 19.50 ((CH₃)-Ind); 121.59, 122.61, 124.97, 125.12, 125.66, 126.19, 126.65, 126.78, 127.09, 128.10, 128.71, 128.83, 128.89, 129.15, 137.47, 138.78, 139.90 (Ind bzw. Ph);

### Mikrosonde: Zr/Si/Cl in konsistentem relativen Elementarverhältnis

### Anmerkung:

Aus dem, nach Entfernen des Et₂O/Hexan-Lösungsmittelgemisches erhaltenen Rohprodukt / LiCl-Kuchens ist keine Methylenchloridextraktion erforderlich. Durch Extraktion mit Et₂O wird die reine pseudo-rac Form erhalten (>95 % der Gesamtausbeute). Anschließende Extraktion des verbliebenen Filterkuchens liefert ein reines Diastereomer eines pseudo-meso Diastereomerenpaares (<5 % der Gesamtausbeute).

### Polymerisationsbeispiele:

### Beispiel I

Ein 20 l Rührreaktor wird nach dem Inertisieren bei Raumtemperatur mit 6 kg flüssigem, gereinigten Propylen gefüllt. 3 g 30%iges MAO werden mit weiteren 800g Propylen in den Reaktor eingespült und die Mischung 15 Minuten gerührt. 2,4 mg Dimethylsilandiylbis(2-methyl-4-phenylinden-1-yl)zikoniumdichlorid, hergestellt nach Beispiel 1, werden in 5 ml Toluol gelöst. 2,1 ml dieser Lösung werden mit 2 g 30%igem MAO vermischt. Anschließend drückt man die Katalysatorlösung mit weiteren 200 g Propylen in den Reaktor und heizt den Ansatz innerhalb von 15 Minuten auf die Polymerisationstemperatur von 70°C auf, die während einer Zeit von einer Stunde konstant gehalten wird. Die Reaktion wird durch Flashen des Propylens nach einer Stunde beendet. Es wurden 1,64 kg Polypropylen mit einer Molmasse M_{w} = 1463 kg/mol und einer Verteilungsbreite M_{w}/Mₙ = 2,9 erhalten. Der Schmelzpunkt beträgt 153°C.

### Beispiel II

Die Versuchsdurchführung erfolgt analog Beispiel I. Es werden 2,7 g 30%iges MAO im Reaktor vorgelegt. Die Katalysatorlösung wird durch Auflösen von 2,9 mg Methyl(trimethylsilyl)silandiylbis(2-methyl-4-phenylinden-1-yl)zirkonium-dichlorid, hergestellt im Beispiel 4, in 6 ml Toluol hergestellt. 2 ml dieser Lösung werden mit 1,8 g 30%igem MAO vermischt.
Es wurden 485 g Polypropylen erhalten. Die Molmasse ist nicht mehr meßbar, der MFI (5/230) beträgt 0,02 und der Schmezpunkt liegt bei 160 °C.

### Beispiel III

Die Versuchsdurchführung erfolgt analog Beispiel I. Es werden 3,9 g 30%iges MAO im Reaktor vorgelegt. Die Katalysatorlösung wird durch Auflösen von 5,9 mg Methyl(trimethylsilyl)silandiylbis(2-methylinden-1-yl)zirkoniumdichlorid, hergestellt im Beispiel 2, in 10 ml Toluol hergestellt. 1,9 ml dieser Lösung werden mit 2,6 g 30%igem MAO vermischt.
Es wurden 583 g Polypropylen mit einer Molmasse M_{w} = 298 kg/mol und einer Verteilungsbreite M_{w}/Mₙ = 2,9 erhalten. Der Schmelzpunkt beträgt 146°C.

## Patentansprüche

1. Verfahren zur Herstellung von chiralen Metallocenen der Formel I 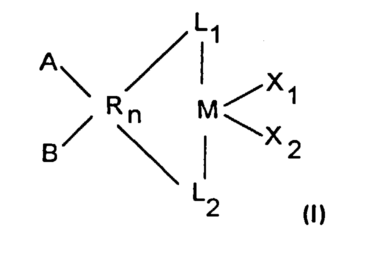
worin M ein Metall aus der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇ - C₂₀- Arylalkylgruppe, eine C₇ - C₂₀- Alkylarylgruppe, eine C₈ - C₂₀ - Arylalkenylgruppe, Wasserstoff oder ein Halogenatom bedeuten,
L₁ und L₂ gleich oder verschieden sind und einen substituierten Cyclopentadienylrest oder einen unsubstituierten oder substituierten Indenylrest bedeuten,
R Kohlenstoff, Silizium, Germanium oder Zinn ist,
A und B gleich oder verschieden sind und die Bedeutung von X₁ und X₂ oder von unsubstituierten oder substituierten Silylresten haben und
n für eine ganze Zahl von 1 bis 4 steht,
durch Umsetzung einer Verbindung der Formel II 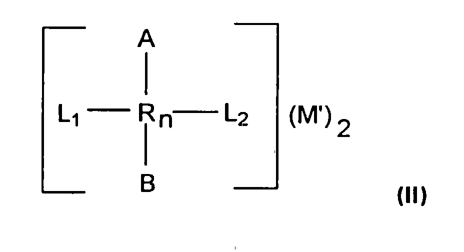 mit einer Verbindung der Formel III
M (X′)₂ X₁ X₂ (III)
in der M′ ein Alkalimetall und X′ ein Halogenatom bedeuten,
dadurch gekennzeichnet, daß die Umsetzung der Verbindung II mit der Verbindung III in Suspension in Lösungsmittelgemischen aus aromatischen und /oder aliphatischen Kohlenwasserstoffen, die auch halogeniert sein können, mit Dialkylethern durchgeführt wird.

2. Verfahren gemäß Anspruch 1, dadurch gekennzeichnet, daß die Lösungsmittelgemische Übergangsenergien E_{T}(30) in einem Bereich von 35,5 bis 31,5 kcal/mol, vorzugsweise in einem Bereich von 34,5 bis 32,5 kcal/mol besitzen.

3. Verfahren gemäß Anspruch 1 oder 2, dadurch gekennzeichnet, daß man eine Verbindung der Formel II als Lösung in Dialkylethern mit einer Verbindung der Formel III als Suspension in aromatischen und/oder aliphatischen Kohlenwasserstoffen, die auch halogeniert sein können, umsetzt, wobei das Lösungsmittelgemisch eine Übergangsenergie ET(30) von 35,5 bis 31,5 kcal/mol besitzt.

4. Verfahren gemäß einem der Ansprüche 1 bis 3, dadurch gekennzeichnet, daß als Kohlenwasserstoffe Benzol, Toluol, p-Xylol, C₅- bis C₁₂-Alkane oder C₁- bis C₄-Chloralkane eingesetzt werden.

5. Verfahren gemäß einem der Ansprüche 1 bis 4, dadurch gekennzeichnet, daß die Diakylether 2 bis 4 C-Atome im Alkylrest besitzen.

6. Verwendung von chiralen Metallocenen gemäß einem der Ansprüche 1 bis 5 als Polymerisationskatalysatoren bei der Polymerisation von Olefinen.

7. Verfahren zur Herstellung von Polyolefinen durch Polymerisation von Olefinen, dadurch gekennzeichnet, daß als Katalysatoren chirale Metallocene gemäß einem der Ansprüche 1 bis 6 eingesetzt werden.

8. Verfahren zur Herstellung von Polyolefinen gemäß Anspruch 7, dadurch gekennzeichnet, daß zusätzlich zu den Metallocenen Aluminoxane als Cokatalysatoren eingesetzt werden.
